# EUROPEAN PATENT APPLICATION

(11) **EP 2 505 292 A1**
(43) Date of publication of application: **03.10.2012**
(21) Application number: 11002632.5
(22) Date of filing: 30.03.2011
(51) Int. Cl.: B23H 1/00, B23H 1/06, B23H 9/00

(54) **Method for modifying an electrically non-conductive workpiece via spark erosion**

(71) Applicant: Universitätsklinikum Freiburg, 79106 Freiburg (DE); Albert-Ludwigs-Universität Freiburg, 79085 Freiburg (DE)
(72) Inventor: Steinberg, Thorsten Assoc. Prof. Dr., 68259 Mannheim (DE); Tomakidi, Pascal Prof. Dr., 79122 Freiburg (DE); Hösel, Tim Dr., 79106 Freiburg (DE); Reinecke, Holger Prof. Dr., 79312 Emmendingen (DE); Kohal, Ralf Prof. Dr., 79312 Freiburg (DE)
(74) Representative: Grindl, Wolfgang

(57) **Abstract**

The present invention relates to a method for modifying an electrically non-conductive workpiece via spark erosion. The inventive method comprises the following steps: a) providing a workpiece comprising an electrically non-conductive surface; b) providing a first working electrode facing the workpiece at a region to be modified such that a gap is provided between the workpiece and the first working electrode; c) providing a dielectric comprising conductive particles, wherein the conductive particles are obtained *via* a burn-off from a second working electrode in a dielectric liquid; d) flushing the dielectric comprising the conductive particles to the workpiece, preferably continuously, such that the conductive particles of the dielectric liquid are deposited at the region to be modified and form an assisting electrode on the electrically non-conductive surface, wherein the dielectric liquid preferably fills the gap between the workpiece and the first working electrode; and e) applying an electric current to the first working electrode such that a plasma channel is generated between the first working electrode and the assisting electrode at the region to be modified, thereby modifying the workpiece *via* spark erosion.

## Description

The present invention relates to a method for modifying an electrically non-conductive workpiece via spark erosion. The inventive method comprises the following steps: a) providing a workpiece comprising an electrically non-conductive surface; b) providing a first working electrode facing the workpiece at a region to be modified such that a gap is provided between the workpiece and the first working electrode; c) providing a dielectric comprising conductive particles, wherein the conductive particles are obtained *via* a burn-off from a second working electrode in a dielectric; d) flushing the dielectric comprising the conductive particles to the workpiece, preferably continuously, such that the conductive particles of the dielectric are deposited at the region to be modified and form an assisting electrode on the electrically non-conductive surface, wherein the dielectric preferably fills the gap between the workpiece and the first working electrode; and e) applying an electric current to the first working electrode such that a plasma channel is generated between the first working electrode and the assisting electrode at the region to be modified, thereby modifying the workpiece *via* spark erosion.

Many electrically non-conductive materials, such as ceramics, are used in the art today for a various number of applications, e.g. high temperature resisting components for e.g. turbines or components thereof such as turbine blades, turbine buckets, a turbine casings, but also vanes, guide vanes, heat shields, electric isolators, etc., or for medical devices or even implantable medical devices such as medical implants, orthopaedic implants, oral implants, etc, or for tools, or any further means. These electrically non-conductive materials, even though they may be moulded into an adequate shape, they may require further modifications, particularly of their non-conductive surface. However, whereas modifications of electrically conductive materials such as metals and products made thereof may be easily modified using electrical discharge machining methods, such methods usually require an extensive approach, when utilizing electrically non-conductive materials.

Nevertheless, electrical discharge machining methods for electrically non-conductive materials are already known in the prior art to some extent. They are used, *inter alia,* to make bores in structural parts provided with a ceramic coating. Thus in turbine blades, for instance, which have a ceramic heat-insulating layer on a metallic basic element, cooling-air bores are made by spark erosion.

In DE 41 02 250 A1, a method for the electrical discharge machining of electrically non-conductive materials is described in general terms. In this method, the non-conductive material, prior to its machining, is coated with an electrically conductive substance. This layer is used as an auxiliary electrode, which, in the electrical discharge machining, creates an electrical contact with a working electrode. The electrically non-conductive material coated with the auxiliary electrode, and at least that end region of the working electrode which points to the auxiliary electrode and on which, in the machining, the spark discharge is realized, are immersed in a dielectric, which is formed by a fluid such as kerosene or even by a gas.

If a voltage is applied to the arrangement, between the working electrode and the auxiliary electrode a spark discharge is realized and, subsequently, an erosion of the auxiliary electrode as well as of the underlying electrically non-conductive material. At the same time, a part of the dielectric is cracked, whereby carbon or conductive carbides are generated, which are deposited in the form of an electrically conductive layer onto the exposed surface regions of the non-conductive material. The electrically conductive layer which is deposited in this way thus replaces the removed material of the auxiliary electrode and, when the working electrode penetrates into the non-conductive material, creates a conductive connection to the surface of the non-conductive material, so that a continuous machining is possible.

A drawback of this method is that the layer of the electrically conductive substance, forming the auxiliary electrode, has to be laboriously removed after the electrical discharge machining. Furthermore, the carbon or conductive carbides is deposited in the form of an electrically conductive layer onto the exposed surface regions of the non-conductive material in a widely spread form without ensuring a minimum coverage or conductivity. This may lead to low or even missing conductivity of the relevant surface regions of the non-conductive material. Additionally, the machining speed is limited, since the process of depositing the conductive layer takes place slowly. Prompt machining is therefore not possible. Moreover, because of the low thickness of the newly formed layer which is in the µm range, there may easily be interruptions in the conductions if this is damaged, thus bringing the process to a complete standstill.

An improved method for the electrical discharge machining of an electrically non-conductive material is disclosed in US 2010/0038344. US 2010/0038344 specifically describes a method for the electrical discharge machining of an electrically non-conductive material, in which the electrically conductive substance, after the electrical discharge machining, is chemically converted by, for example, oxidative heat treatment. The basic notion of the method is therefore to use an electrically conductive substance as an auxiliary electrode, which, following completion of the electrical discharge machining, is chemically converted, in particular oxidized, and so is either removed or else is present in a form which does not impair the properties of the electrically non-conductive material. Such a electrically conductive substance is e.g. a metal or a metal oxide such as zirconium oxide, which is already contained in the material, e.g. the ceramic, to be modified. Such a method, however, does not overcome the problems of low or even missing conductivity at the site of erosion.

US 2009/0200274, showing a further development of the initial method, discloses an electrode arrangement with a first inner component for eroding the electrically non-conductive material and a second outer component for depositing an electrically conductive substance on the electrically non-conductive material. According to US 2009/0200274 it may be beneficial if the deposition electrode surrounds the erosion electrode, which is intended to ensure that the deposition electrode is arranged spatially near to that part of the electrically non-conductive material on which the electrically conductive substance is to be deposited. However, even though the deposition occurs continuously at the site of erosion it only allows to take place particularly on the side walls of the electrical discharge machining region. It thus only allows to erode the side walls of an already prepared hole in the non-conductive surface and does not remove the problems of low conductivity e.g. at the top of the electrode arrangement. Even in the case, the electrode arrangement is used in form of two separate electrodes, this problem may not be overcome.

A further modification of the initial method is shown e.g. in WO 2009/052841. WO 2009/052841 discloses a method of electric discharge machining utilizing a standard electrode, wherein a dielectric liquid is supplied directly to the site of erosion either via an injector or a nozzle, wherein the injector or nozzle may be an external injector or nozzle or may be contained in the material to be modified, e.g. a drilled hole at the site of erosion. Likewise, the dielectric liquid may be supplied to the site of erosion via the working electrode itself, wherein the working electrode may be hollow to allow transport of the dielectric liquid via the electrode. The dielectric liquid in WO 2009/052841 is water and may furthermore contain electrically conductive nano- or microparticles, which may be deposited at the site of erosion during the method of electric discharge machining. The method furthermore requires preparation of a graphite layer, an electrically conductive organic compound or a metal such as zirconium as an assisting electrode. This assisting electrode is to be applied prior to the method of electric discharge machining. However, even though this method provides some advantageous features, it requires a specifically prepared dielectric liquid, which has to be provided prior to the method of electric discharge machining in sufficient quantity. This may require space and causes unnecessary costs due to the amounts and disposal of the continuously supplied dielectric liquid used for the whole process.

Summarizing the above, there is still a need in the art to provide a method of electric discharge machining, which allows eroding electrically non-conductive surfaces via spark erosion in a quick and not cost expensive manner. Likewise, such a method shall be applicable to different geometric forms and preferably avoids large amounts of a continuously supplied dielectric. Furthermore, it may be desired to dispense the prior treatment of the workpiece to be modified by prior coating the workpiece with a graphite layer, an electrically conductive organic compound or a metal such as zirconium. Additionally, it is an object, to allow modification of electrically non-conductive surfaces of various kinds of materials, to allow e.g. subsequent coating and adhesion of such materials, e.g. with surface coatings, cells, polymers, etc. Accordingly, it is also an object of the present invention, to provide materials or substrates comprising such modified electrically non-conductive surfaces.

This object is solved by the attached claims. Preferably, according to a first embodiment, the object underlying the present invention is solved by a method for modifying a workpiece comprising an electrically non-conductive surface *via* spark erosion, the method comprising following steps:
a) preferably providing a workpiece comprising an electrically non-conductive surface;
b) providing a first working electrode facing the workpiece at a region to be modified such that a gap is provided between the workpiece and the first working electrode;
c) providing a dielectric comprising electrically conductive particles, wherein the conductive particles are preferably obtained *via* a burn-off from a second working electrode in a dielectric;
d) flushing the dielectric comprising the electrically conductive particles to the workpiece, preferably continuously, such that the electrically conductive particles of the dielectric are deposited at the region to be modified and form an assisting electrode on the electrically non-conductive surface, wherein the dielectric preferably fills the gap between the workpiece and the first working electrode;
e) applying an electric current to the first working electrode such that a plasma channel is generated between the first working electrode and the assisting electrode at the region to be modified, thereby modifying the workpiece via spark erosion.

According to step a) of the first embodiment, the inventive method for modifying a workpiece as defined above *via* spark erosion requires provision of a workpiece comprising an electrically non-conductive surface.

Within the context of the present invention, the term "modifying a workpiece" or modifying an electrically non-conductive surface of such a workpiece preferably means altering the respective surface structure of the workpiece such that a micro-structured surface results.

Such a workpiece preferably may be any workpiece comprising an electrically non-conductive surface or consisting of an electrically non-conductive material. Such a workpiece preferably may be any workpiece comprising or consisting of an electrically conductive material which has been optionally coated with at least one electrically non-conductive surface or electrically non-conductive material. Such a workpiece may be likewise preferably any workpiece comprising or consisting of an electrically non-conductive material, which has been optionally coated with at least one layer of the same or a different electrically non-conductive material. According to a specific aspect, the surface of the workpiece and the workpiece as such (the material, carrying the outer surface or surface coating) may consist of different materials.

Preferably, the electrically non-conductive material or surface of such a workpiece comprises or consists of an electrically non-conductive material selected, without being limited thereto, from e.g. any known ceramic or ceramic material, preferably any known electrically non-conductive ceramic or ceramic material, glass, quartz, sapphire, or any further electrically non-conductive material known to a skilled person, preferably a material comprising, containing or consisting of apatite, hydroxyl apatite, zircon, zirconium silicate, ZrSiO₄, zirconium oxide, ZrO₂, fully or partially stabilized zirconium oxide, fully or partially stabilized ZrO₂, yttrium oxide, Y₂O₃, yttrium zirconium oxide (Y₂O₃-ZrO₂), alumina toughened zirconia silicon, silicon nitride, Si₃N₄, silicon carbide, silicate, boron, boron carbide, boron nitride, tungsten carbide, aluminium, aluminium oxide, Al₂O₃, zirconia toughened alumina, ZnO, In₂O₃, etc.

Likewise preferably, the electrically conductive material, which may be coated with an electrically non-conductive material as defined above, may be selected from any metal or alloy comprising or consisting of iron (Fe), copper (Cu), Nickel (Ni), Zink (Zn), Tin (Sn), Lead (Pb), Magnesium (Mg), Boron (B), Carbon (C), Aluminium (Al), Scandium (Sc), Titanium( (Ti), Vanadium (V), Chromium (Cr), Manganese (Mn), Yttrium (Y), Zirconium (Zr), Niobium (Nb), Molybdenum (Mo), Ruthenium (Ru), Rhodium (Rh), Palladium (Pd), Silver (Ag), Cadmium (Cd), a rare earth metal, Hafnium (Hf), Tantalum (Ta), Tungsten (W), Rhenium (Re), Osmium (Os), Iridium (Ir), Platinum (Pt), Gold (Au), Mercury (Hg), and/or comprises a compound having the following formula MCrAlX, wherein M is selected from the group comprising iron (Fe), Cobalt (Co), Nickel (Ni), and X is an active element selected from the group comprising Yttrium (Y), Silicon (Si) and/or an element selected from rare earth metals, and or any alloy as specifically described in EP 0 486 489, EP 0 786 017, EP 0 412 397 or in EP 1 306 454.

Preferably, such electrically conductive materials comprise or consist of Iron (Fe), Nickel (Ni) or Cobalt (Co) based super alloys, more preferably as disclosed in any of EP 1 204 776, EP 1 306 454, EP 1 319 729, WO 99/67435 or WO 00/44949.

Such an electrically conductive material may also be selected from metals or alloy preferably used for medical purposes, such as materials used for stents, e.g. metals or alloys, examples of which include, but are not limited to, stainless steel, "MP35N," "MP20N," nickel titanium alloys such as Nitinol (e.g., ELASTINITE^{®} by Advanced Cardiovascular Systems, Inc., Santa Clara, Calif.), tantalum, platinumiridium alloy, gold, magnesium, or combinations thereof. "MP35N" and "MP20N" are trade names for alloys of cobalt, nickel, chromium and molybdenum available from standard Press Steel Co., Jenkintown, Pa. "MP35N" consists of 35% cobalt, 35% nickel, 20% chromium, and 10% molybdenum. "MP20N" consists of 50% cobalt, 20% nickel, 20% chromium, and 10% molybdenum

Likewise preferably, the electrically conductive material, which may be coated with an electrically non-conductive material as defined above, may be selected from an alloy preferably showing the following chemical composition:

**Table 1: Specific alloys preferred as electrically conductive material, which may be coated with an electrically non-conductive material**

| | C | Cr | Ni | Co | Mo | W | Ta | Nb | Al | Ti | B | Zr | Hf |
|---|---|---|---|---|---|---|---|---|---|---|---|---|---|
| Ni-basis precision casting alloys | | | | | | | | | | | | | |
| GTD 222 | 0.10 | 22.5 | rest | 19.0 | | 2.0 | 1.0 | | 1.2 | 2.3 | 0.008 | | |
| IN 939 | 0.15 | 22.4 | rest | 19.0 | | 2.0 | 1.4 | 1.0 | 1.9 | 3.7 | 0.009 | 0.10 | |
| IN 6203 DS | 0.15 | 22.0 | rest | 19.0 | | 2.0 | 1.1 | 0.8 | 2.3 | 3.5 | 0.010 | 0.10 | 0.75 |
| Udimet 500 | 0.10 | 18.0 | rest | 18.5 | 4.0 | | | | 2.9 | 2.9 | 0.006 | 0.05 | |
| IN 738 LC | 0.10 | 16.0 | rest | 8.5 | 1.7 | 2.6 | 1.7 | 0.9 | 3.4 | 3.4 | 0.010 | 0.10 | |
| SC 16 | <0.01 | 16.0 | rest | - | 3.0 | | 3.5 | | 3.5 | 3.5 | <0.005 | <0.008 | |
| Rene 80 | 0.17 | 14.0 | rest | 9.5 | 4.0 | 4.0 | | | 3.0 | 5.0 | 0.015 | 0.03 | |
| GTD 111 | 0.10 | 14.0 | rest | 9.5 | 1.5 | 3.8 | 2.8 | | 3.0 | 4.9 | 0.012 | 0.03 | |
| GTD 111 DS | | | | | | | | | | | | | |
| IN 792 CC | 0.08 | 12.5 | rest | 9.0 | 1.9 | 4.1 | 4.1 | | 3.4 | 3.8 | 0.015 | 0.02 | |
| IN 792 DS | 0.08 | 12.5 | rest | 9.0 | 1.9 | 4.1 | 4.1 | | 3.4 | 3.8 | 0.015 | 0.02 | 1.00 |
| MAR M 002 | 0.15 | 9.0 | rest | 10.0 | | 10.0 | 2.5 | | 5.5 | 1.5 | 0.015 | 0.05 | 1.50 |
| MAR M 247 LC DS | 0.07 | 8.1 | rest | 9.2 | 0.5 | 9.5 | 3.2 | | 5.6 | 0.7 | 0.015 | 0.02 | 1.40 |
| CMSX 2 | <0.006 | 8.0 | rest | 4.6 | 0.6 | 8.0 | 6.0 | | 5.6 | 1.0 | <0.003 | <0.0075 | |
| CMSX 3 | <0.006 | 8.0 | rest | 4.6 | 0.6 | 8.0 | 6.0 | | 5.6 | 1.0 | <0.003 | <0.0075 | 0.10 |
| CMSX 4 | - | 6.0 | rest | 10.0 | 0.6 | 6.0 | 6.0 | | 5.6 | 1.0 | | 3.0 | 0.10 |
| CMSX 6 | <0.015 | 10.0 | rest | 5.0 | 3.0 | <0.10 | 2.0 | <0.10 | 4.9 | 4.8 | <0.003 | <0.0075 | 0.10 |
| PWA 1480 SX | <0.006 | 10.0 | rest | 5.0 | | 4.0 | 12.0 | | 5.0 | 1.5 | <0.0075 | <0.0075 | |
| PWA 1483 SX | 0.07 | 12.2 | rest | 9.0 | 1.9 | 3.8 | 5.0 | | 3.6 | 4.2 | 0.0001 | 0.002 | |

| Co-basis precision casting alloys | | | | | | | | | | | | | |
|---|---|---|---|---|---|---|---|---|---|---|---|---|---|
| FSX 414 | 0.25 | 29.0 | 10 | rest | | 7.5 | | | | | 0.010 | | |
| X 45 | 0.25 | 25.0 | 10 | rest | | 8.0 | | | | | 0.010 | | |
| ECY 768 | 0.65 | 24.0 | 10 | 51.7 | | 7.5 | 4.0 | | 0.25 | 0.3 | 0.010 | 0.05 | |
| MAR M 509 | 0.65 | 24.5 | 11 | rest | | 7.5 | 4.0 | | | 0.3 | 0.010 | 0.60 | |
| CM 247 | 0.07 | 8.3 | rest | 10.0 | 0.5 | 9.5 | 3.2 | | 5.5 | 0.7 | | | 1.5 |

According to a further aspect of the first embodiment, such a workpiece may be selected e.g. from an implantable medical device or a medical implant, an orthopaedic implant, an oral implant, a turbine or a part thereof, a turbine blade, a turbine bucket, a turbine casing, a vane, a guide vane, a heat shield, an electric isolator, any ceramic material or workpiece, any ceramic sensors, a bracket, holder or support for sensors, a bracket, holder or support for actuators, knifes for medical or technical applications, endeffectors for minimal invasive instruments, invasive instruments or parts thereof, scalpels, nozzle plates for Ink-jet printing, textiles, pressure units etc.

According to step b) of the inventive method a first working electrode is provided facing the workpiece at a region to be modified such that a gap is provided between the workpiece and the first working electrode.

In this context, such a first working electrode is preferably an electrode comprising or consisting of an electrically conductive material, preferably a metal or an alloy as defined above, more preferably consisting of or comprising copper, iron, tungsten, or tungsten-copper, or alloys thereof, graphite, carbon compounds, carbide compounds, metal matrix-ceramics, such as ZrBr₂/Cu, or from any further electrically conductive material mentioned herein.

Such a first working electrode is preferably mounted at, nearby or distinct from the workpiece such that the first working electrode faces the workpiece (or preferably the assisting electrode) at a region to be modified. Such a region to be modified is preferably the region, which is to be eroded via spark erosion using the inventive method. In this context, the first working electrode is preferably mounted in a distance, such that a gap between the first working electrode and the workpiece (or preferably the assisting electrode) is provided and no direct contact between the first working electrode and the workpiece occurs. Typically, the gap is adjusted to a distance, which allows an electrical discharge from the first working electrode to the workpiece (or preferably the assisting electrode). Within the context of the present invention, the term gap thus preferably means the distance between the first working electrode and the workpiece (or preferably the assisting electrode) being sufficiently narrow for a spark to cross over. Typically, the gap is filled with a dielectric, preferably with a dielectric liquid as defined herein. The first working electrode is furthermore preferably connected with a power supply unit.

According to step c) of the inventive method a dielectric is provided comprising conductive particles, wherein the conductive particles are preferably obtained *via* a burn-off from a second working electrode in a dielectric, preferably provided in parallel to eroding or modifying the workpiece as described herein with the first working electrode via spark erosion as defined herein..

Such a proceeding advantageously allows avoiding the continuous provision of new dielectric, which has been continuously supplemented with electrically conductive nano- or microparticles, from outside the system into the system, but utilizes the dielectric already contained in the same system, which is continuously supplemented with a burn-off from a second working electrode. This is advantageous from economical but also from environmental aspects and allows a reduction of costs and efforts.

In the above context, the second working electrode is preferably composed as already described for the first working electrode. Preferably, the second working electrode is placed in a position at, nearby or distinct from the workpiece, thereby facing a conductive element. By placing the first working electrode with respect to the workpiece as described, preferably a gap is provided between the second working electrode and the conductive element. , the gap being filled with a dielectric as defined herein. In this context, a conductive element may be any suitable tool or means providing a conductivity, such as an electrode, a (metal) clamp, e.g. for fastening the workpiece, a further fastening means, etc. The conductive element typically forms an electric circuit with the second working electrode upon generating a plasma channel.

Furthermore, a dielectric as defined herein is preferably a dielectric liquid, more preferably a dielectric liquid selected from water, a water containing solution or suspension, a water containing solution or suspension with at least one electrically conductive compound, preferably a carbon containing liquid, such as a liquid or suspension containing an organic compound, a hydrocarbon compound, preferably a hydrocarbon compound selected from a compound having formula CₙH₂ₙ₊₂ or CₙH₂ₙ, wherein n is preferably an integer selected from a range of about 5 to 40 or 6 to 40, more preferably a range of about 8 to 32, or an aromatic hydrocarbon, or a mixture thereof, preferably selected from kerosene, petroleum, F tetrachlorocarbon, tetrachlorocarbon, trichloroethylene, tetraline, olive oil, paraffin oil, or specific dielectrics such as IME 63^{®}, OH 2753^{®}, glycols, paraffinic oil, paraffinic mineral oil, naphtenic oil, naphtenic mineral oil, silicon oils, polyols, glycerine, polysaccharides, a sugar, etc. The dielectric is preferably cracked, chemically or physically converted or decomposed upon application of electric current and leads to electrically conductive particles as described above. The electrically particles are preferably deposited at the region to be modified.

Preferably, the workpiece as defined herein, the first working electrode as defined herein and/or the second working electrode as defined herein are immersed in the dielectric as defined herein such that the gap between the first working electrode as defined herein and the workpiece and/or the gap between the second working electrode as defined herein and the conductive element is filled with the dielectric.

Likewise preferably, the electrically conductive particles obtained *via* a burn-off from a second working electrode as defined herein in a dielectric as defined herein may contain (electrically conductive) particles from the second working electrode as defined herein and/or particles derived from the dielectric as defined herein. In this context, the term (electrically conductive) particles from the second working electrode and/or the dielectric preferably resembles fragmentation, separation, reaction or combustion products, etc. obtained by the burn-off. The "burn-off" occurs upon applying an electric current to the second working electrode in a dielectric as defined herein such that a plasma channel is generated between the first working electrode and the conductive element in the presence of a dielectric as defined herein. Generating such a plasma channel typically erodes the second working electrode such that electrically conductive particles of the electrode may be generated or released into the dielectric. Such electrically conductive particles may be of the same material or composition as defined above for the first or second working electrode, preferably selected from any electrically conductive material, more preferably selected from a metal or an alloy, even more preferably consisting of or comprising copper, iron, tungsten, or tungsten-copper, or alloys thereof, graphite, carbon compounds, carbide compounds, metal matrix-ceramics, such as ZrBr₂/Cu or from any further electrically conductive material mentioned above. Furthermore, the burn-off may comprise electrically conductive combustion products resulting from decomposition or chemical or physical conversion of the dielectric used. Such an electrically conductive combustion product may comprise e.g. graphite.

According to step d) of the inventive method the dielectric comprising the electrically conductive particles obtained *via* a burn-off from a second working electrode as defined herein in a dielectric as defined herein are flushed to the workpiece or a specific section thereof, preferably the region to be modified. Flushing the electrically conductive particles (in and with the dielectric) is preferably carried out such that the electrically conductive particles are transported to the workpiece, preferably the region to be modified. Transport of the electrically conductive particles with the dielectric may occur using a stream or flow directed to the workpiece or a specific section thereof, preferably the region to be modified. Such a directed stream or flow may be realized via an injector or a nozzle, wherein the injector or nozzle may be an external injector or nozzle or may be contained in the material to be modified, e.g. a drilled hole at the site of erosion, or may be supplied to the site of erosion via the working electrode itself, e.g. via a hollow working electrode, preferably having a drilled inner channel to allow transport of the dielectric liquid and the electrically conductive particles via the electrode. The external injector or nozzle is preferably located at or nearby the second working electrode. Typically, the position of such an external injector or nozzle is selected such as to allow a directed provision of the dielectric containing the electrically conductive particles to the workpiece or a specific section thereof, preferably the region to be modified and a deposit of these electrically conductive particles at this place. Flushing the electrically conductive particles at the workpiece or a specific section thereof, preferably the region to be modified usually occurs in a continuous manner. Likewise, deposition the electrically conductive particles at the workpiece or a specific section thereof, preferably the region to be modified usually occurs in a continuous manner.

The *in situ* prepared electrically conductive coating produced by a burn-off via a second working electrode are typically deposited at the workpiece or a specific section thereof, preferably the region to be modified. Such a deposition preferably forms an electrically conductive coating or layer at the region to be modified and thus an assisting electrode on the electrically non-conductive surface. Preferably, a minimum conductivity is provided with this electrically conductive coating or layer at the region to be modified. Preferably, the layer of deposited electrically conductive particles has an electrical conductivity of at least 0.01 Scm⁻¹. Likewise preferably, the dielectric as defined herein, preferably a dielectric liquid as defined herein containing the electrically conductive particles fills the gap between the workpiece and the first working electrode.

According to a further step e) of the inventive method an electric current is applied to the first working electrode such that a plasma channel is generated between the first working electrode and the assisting electrode at the region to be modified, thereby modifying the workpiece via spark erosion.

The electric current applied to the first working electrode and/or to the second working electrode as defined herein may be a direct current (DC) or an alternating current (AC), preferably a single phase alternating current (AC), a pulsed alternating current (AC), or a pulsed direct current (DC).

The electric current applied to the first working electrode and/or to the second working electrode as defined herein preferably may comprise a voltage in a range of about - 300 V to about + 300 V, preferably about - 200 V to about + 200 V.

Furthermore, the electric current applied to the first working electrode and/or to the second working electrode as defined herein preferably may comprise an electric current in a range of about 0.1 to about 5 A, preferably about 0.1 to about 4 A, more preferably about 0.1 to about 3 A, even more preferably about 0.1 to about 2 A, likewise even more preferably about 0.1 to about 1 A, most preferably about 0.3 to about 0.6 A.

Additionally, the pulsation ON time of the electric current applied to the first working electrode and/or to the second working electrode as defined herein preferably may have a duration of about 0.1 to about 15 µs, preferably a duration of about 0.1 to about 10 µs, more preferably a duration of about 0.1 to about 5 µs.

Particularly preferably following operating parameters are applied:

| | |
|---|---|
| Voltage | < -80V and > 80V |
| Current | < 4A |
| Pulsation ON Time | < 10µs |

Modifying the workpiece typically means erosion of the surface, wherein a removal of material occurs due to sparks between two conductive materials (electrodes) in a dielectric fluid, i.e. the (first) working electrode and the electrically conductive coating, preferably in the region to be modified. These sparks occur sequently, temporarily and regionally separated and are typically not stationary. The spark erosion according to the inventive method is a forming procedure where the geometry of working electrode is typically transferred to the electrically conductive surface as the counter electrode with an additional working gap. Both are positioned close to each other during the process, while a voltage is applied as defined above. In case of sufficient voltage, a plasma channel is generated. The resulting working gap distance depends on the breakthrough voltage of the dielectric. The energy-rich current flow through this plasma channel leads to a removal of a micro-volumina on both electrodes. The material removal in the macroscopic scale is the results of the sum of multiple sparks (discharges) that occur sequentially with a high frequency. An accepted theory of the removal mechanism is the "electrothermal erosion theory" developed by *Lazarenko* and *Zolotych.* They claimed that the high temperatures in the plasma channel leads to melting and vaporising of the material in the impact region. The determined temperatures typically do vary between 2'000 and 100'000 Kelvin. The removal preferably takes place as the melted and/or evaporated material is expelled from the surface. The removal allows to prepare a hole into a surface, to erode the side walls of an already prepared hole in the non-conductive surface or even to remove undesired roughness of the surface to a desired extent. The dimension of the holes and/or the roughness of a such modified surface can be adjusted specifically, e.g. in an area of > 100 µm to about 0.5 µm.

A particular advantage of the inventive method using an electrode arrangement with a first working electrode for erosion of the workpiece at the region to be modified and a second working electrode for providing a burn-off comprising electrically conductive particles to the workpiece at the region to be modified raises the possible machining speed considerably, as compared with the methods described in the prior art. Since the deposition of the electrically conductive substance takes place under optimized conditions, the electrically conductive layer has high stability. This additionally reduces the risk that damage to the layer may lead to an interruption in the electrical circuit and consequently to the standstill of the method.

Further to the electrically conductive coating prepared via a burn-off from a second working electrode, the workpiece may be primarily coated with an electrically conductive coating at the region to be modified prior to depositing conductive particles at this region. Such an electrically conductive coating may be applied in the form of a viscous fluid, film, lacquer, or vapour deposited layer. In this specific case such an electrically conductive coating preferably forms a (first) assisting electrode on the electrically non-conductive surface, wherein the electrically conductive coating prepared via a burn-off from a second working electrode preferably forms a (second) assisting electrode. This (second) assisting electrode is preferably coated or applied on the (first) assisting electrode. This very specific aspect provides the advantage, that in comparison to methods of the prior art the electrically conductivity of the formerly electrically non-conductive surface is additionally improved via a (first) coating in the form of a viscous fluid, film, lacquer, or vapour deposited layer. It further prevents the risk that damage to the (second) conductive coating may lead to an interruption in the electrical circuit. Consequently, a standstill of the inventive method due to missing conductivity can be reduced to a maximum. Furthermore, since the electrically conductive coating in the form of a viscous fluid, film, lacquer, or vapour deposited layer may be applied prior to carrying out the inventive method, the workpiece to be modified may be pretreated accordingly with this (first) electrically conductive coating in advance prior to carrying out the inventive method. Application of this electrically conductive coating can be carried out quickly and reliably and preferably provides for storage of such pretreated workpiece prior to carrying out the inventive method. This likewise increases the possible machining speed considerably, as compared with the methods described in the prior art.

The (additional) electrically conductive coating in the form of a viscous fluid, film, lacquer, or vapour deposited layer preferably adheres to the workpiece and forms an adherent conductive coating of a preferably defined thickness. It may be applied to any workpiece with any form or structure, preferably by spraying, dipping, immersing, via a doctor knife, by printing, e.g. screen printing, off-set printing, etc. Applying the (additional) electrically conductive coating may also occur via atmospheric plasma spraying (APS), LPPS, VPS or CVD. Preferably, the electrically conductive coating in form of a viscous fluid, film, lacquer, or vapour deposited layer has a thickness of about 0.01 µm to about 3 mm, preferably a thickness of about 0.01 µm to about 2 mm, more preferably a thickness of about 0.01 µm to about 1 mm, even more preferably a thickness of about 0.1 or 0.5 µm to about 1 mm.

The thickness of the electrically conductive coating in form of a viscous fluid, film, lacquer, or vapour deposited layer may be dependent on the type of coating. If for example the electrically conductive coating in form of a viscous fluid, the viscosity is preferably selected such that the fluid securely adheres to the workpiece. Such a viscous fluid, if applied, may have a thickness of about 0.01 µm to about 1 mm, preferably of about 0.01 µm to about 0.5 mm, even more preferably a thickness of about 0.01 µm to about 100 µm. Likewise, the electrically conductive coating in form of a film or lacquer, if applied, may have a thickness of about 0.01 µm to about 1 mm, preferably of about 0.01 µm to about 0.5 mm even more preferably a thickness of about 0.01 µm to about 100 µm, or even a thickness of about 0.01 µm to about 10 µm, or a thickness of about 0.01 µm to about 5 µm. Likewise preferably, the electrically conductive coating in form of a vapour deposited layer may have a thickness of about 0.01 µm to about 10 µm, preferably a thickness of about 0.01 µm to about 5 µm, more preferably a thickness of about 0.01 µm to about 2 µm, or even preferably a thickness of about 0.01 µm to about 1 µm.

Likewise preferably, the electrically conductive coating in form of a viscous fluid, film, lacquer, or vapour deposited layer accordingly in advance of carrying out the inventive method has an electrical conductivity of at least 0.01 Scm⁻¹.

The electrically conductive coating in form of a viscous fluid, film, lacquer, or vapour deposited layer may comprise electrically conductive particles, selected from, without being limited thereto, from graphite particles, a metal or an alloy, even more preferably graphite particles and/or electrically conductive particles comprising or consisting of a metal or an alloy as defined herein, e.g. any metal or alloy comprising or consisting of iron (Fe), copper (Cu), Nickel (Ni), Zink (Zn), Tin (Sn), Lead (Pb), Magnesium (Mg), Boron (B), Carbon (C), Aluminium (Al), Scandium (Sc), Titanium( (Ti), Vanadium (V), Chromium (Cr), Manganese (Mn), Yttrium (Y), Zirconium (Zr), Niobium (Nb), Molybdenum (Mo), Ruthenium (Ru), Rhodium (Rh), Palladium (Pd), Silver (Ag), Cadmium (Cd), a rare earth metal, Hafnium (Hf), Tantalum (Ta), Tungsten (W), Rhenium (Re), Osmium (Os), Iridium (Ir), Platinum (Pt), Gold (Au), Mercury (Hg), or comprising copper, iron, tungsten, or tungsten-copper, or alloys thereof, graphite, metal matrix-ceramics, such as ZrBr₂/Cu, or any further compound, such as e.g. TiN. The electrically conductive coating in form of a viscous fluid, film, lacquer, or vapour deposited layer may furthermore comprise or consist of any electrically conductive fluid, film, lacquer, etc., known in the art, such as PMMA (poylmethylmethacrylate) based electrically conductive lacquers, electrically conductive screen print lacquers or inks, preferably carbon containing electrically conductive screen print lacquers or inks, such as SD-2841 or SD-2841-HAL-IR (Lackwerke Peters GmbH, Kempen, Germany), modified SU-8 (mrt, Berlin) etc. A vapour deposited layer preferably comprises TiN as an electrically conductive compound.

Additionally to applying an electrical current, the workpiece, preferably the region of the workpiece to be modified may be heated, e.g. to a temperature at which the electrically non-conductive material gets electrically conductive, preferably a temperature at which the electrically non-conductive material has an electrical conductivity of at least 0.01 Scm⁻¹. Heating of the workpiece may occur as a whole or locally, preferably at the region to be modified, e.g. via an oven, a laser, a heat fan or radiator, etc. Heating of the workpiece may also occur via a hot dielectric. In this context, the dielectric is preferably provided in form of a hot liquid or in gaseous form, preferably selected from a dielectric as defined above in form of a hot liquid or in gaseous form, preferably containing electrically conductive particles as defined above.

The inventive method for modifying the electrically non-conductive surface of a workpiece as defined herein may be used to modify the surface structure, e.g. to provide a defined microstructure or a microstructured surface, to pit the surface, to provide depots, holes or cavities, pits, etc. or to remove or at least diminish the roughness or unevenness of a surface, at least to a certain extent.

After modifying the workpiece or a region thereof using the inventive method as defined herein, the workpiece or the modified region may be cleaned, preferably to remove remnants of the dielectric, of electrically conductive particles deposited at the region to be modified, of electrically conductive (surface) coatings applied to the surface prior to carrying out the inventive method, of reaction products or burn-off compounds of the electrical discharge (spark-erosion) reaction in the dielectric, etc. Cleaning of the modified surface may be carried out via mechanical treatment, chemical treatment, and/or heat treatment.

Mechanical treatment may comprise physically removing remnants as defined above but also further mechanical abrasion of the surface, if necessary, e.g. for further smoothing the surface.

Additionally or alternatively, the surface may be cleaned by chemical treatment. Chemical treatment preferably comprises the use of chemical reagents, preferably acids such as hydrochloric acid (HCl), nitric acid (HNO₃), aqua regia or nitrohydrochloric acid (a mixture of hydrochloric acid (HCl) and nitric acid (HNO₃)), sulphuric acid (H₂SO₄), persulfuric acid or peroxysulfuric acid or Caro's acid (Piranha solution) (H₂SO₅), hydrogen peroxid (H₂O₂), chromiumsulfuric acid, RCA-solution, alkaline solutions like KOH or NaOH for example, perfluoroacetic acid, N-Methylpyrollidone (NMP), dimethylether, or mixtures of one or more of the chemicals and/or the use of one or more of the chemicals orn the mixtures in several at laest more than one steps, etc.

Likewise additionally or alternatively, the surface may be cleaned by heat treatment. In this context, heat treatment is usually carried out with the workpiece may occur as a whole or locally, preferably at the region to be modified, e.g. via an oven, a laser, a heat fan, etc. The temperatures applied may be dependent on the material of the workpiece. Preferably, the temperatures used, when the workpiece comprises or consists of a ceramic, a metal or an alloy as defined herein, are typically in a range of about 60 °C to about 1400 °C, preferably in a range of about 200°C to about 1200°C, even preferably in a range of about 400°C to about 800°C,

According to a further embodiment, the present invention also provides a modified workpiece comprising an electrically non-conductive surface, preferably as defined herein, obtained or obtainable according to the inventive method for modifying a workpiece via spark erosion as defined herein. Such a modified workpiece may be any (modified) workpiece as described herein, e.g. an implantable medical device or a medical implant, an orthopaedic implant, an oral implant, an endoprosthesis, a stent, a graft, a pacemaker or a casing thereof, an artificial joint or a part thereof, artificial bones, or parts thereof, fixing materials for medical purposes, such as surgical nails, screws and clamps, other technical workpieces, such as a jet engine, a turbine or a part thereof, e.g. a gas turbine or a part thereof, a gas turbine of an aircraft, a gas turbine for an electricity generating power station, a steam turbine or a compressor, a turbine blade, a turbine bucket, a turbine casing, a vane, a guide vane, a heat shield, or an electric isolator, preferably of the afore mentioned turbines, etc., or any further ceramic workpiece or any workpiece consisting of ceramic or being coated with a ceramic layer.

According to a particularly preferred embodiment, the workpiece obtained or obtainable according to the inventive method for modifying a workpiece may be an implantable medical device or a medical implant. In this context, it is to be noted that modern surgical techniques are often co-dependent on advancement and development of implantable medical devices or medical implants. Implantable medical devices or medical implants as defined herein may be used in many fields of medicine, e.g. in the fields of oral biotechnology, orthopaedics, or further medical fields, particularly for dental implants for the oral cavity, but also for use in the general area of orthopaedic medicine, the general area of endoprostheses, or for further applications. Within the context of the present invention, the term implantable medical device preferably thus means any device suitable for implantation, e.g. in the oral cavity, for use in the general area of orthopaedic medicine, for use in the general area of endoprostheses, for *in vivo* sensors e.g. glucose sensors, for pacemakers and so on.

Materials forming such implantable medical devices or medical implants as defined herein typically must be selected based on the long term health benefits of the recipient. Furthermore, implantable medical devices implants usually require different mechanical properties dependent on the respective medical application. In any of these cases it is very important to select a material that is biocompatible, preferably inert to the surrounding tissue or bone, does not elicit an undesired immune response and is stable over the time of implantation. Furthermore, if the implantable medical device or medical implant as defined herein is visible after implantation, such as in oral biotechnology, it must be cosmetically appropriate. For example, implantable medical devices in the field of oral biotechnology or dentistry must be cosmetically appropriate, provide stability over time of implantation, and have to withstand very large mechanical forces.

Currently, several material types are allowable and suited for implantation. These materials typically include metals, alloys, various grades of plastics, and composite materials. Furthermore, ceramic has been employed as a particularly suitable material, in particular for implantable medical devices in the fields of oral biotechnology and orthopaedics. Particularly preferred for implantable medical devices or medical implants as defined herein are ceramics as defined above or implantable medical devices or medical implants as defined herein from a further material, which have been coated with a ceramic layer as defined above. In this context, one main consideration that must be made when selecting a material for implantation is the strength of the implantable medical device. This is particularly important in applications where the implantable medical device is generally interfaced within areas of high stresses. For example, implantable medical devices for the oral cavity must be based on very strong material to allow for the stresses that such an implant are likely to be subjected to after implantation. In addition, due to the acid-like properties usually found within an oral cavity, any material chosen suitable as an implantable medical device must be non-reactive/inert to the acidic environment. Another aspect which must be considered when selecting a material for implantation is the surface topography of such an implantable medical device. Preferably, the surface topography of such an implantable medical device must allow for successful cell adhesion thereby aiding the healing process after implantation. To be noted, poor adhesion and lack of growth of cells to a surface of such an implantable medical device can lead to e.g. thrombosis, and infections thus leading to further problems to a patient. Accordingly, materials chosen as the basis for implantable medical devices for use e.g. in oral biotechnology or orthopaedics but also in other medical fields present particular challenges to industrial designers and must be carefully considered not least because of their interface with hard and soft tissue. It is therefore imperative that implantable medical devices are developed so that they have the capability of both a good osseointegration as well as soft tissue integration.

Accordingly, an implantable medical device or medical implant as defined herein may consist of or comprises (e.g. as a surface layer) an electrically non-conductive material, as defined herein, preferably ceramic or a ceramic material. Even more preferably, such an implantable medical device or medical implant as defined herein is prepared in advance as a workpiece, which may then be modified with the inventive method of modifying.

According to a further specific aspect, such an implantable medical device or medical implant as defined herein may be cultivated with target cells, preferably for a subsequent implantation of the implantable medical device or medical implant into a patient. Such an implantable medical device or medical implant as defined herein may be preferably cultivated with cells *in vitro* and preferably *ex vivo.* Such cells may be selected from any cell occurring in a patient to be treated, preferably from the environment of the site of implant, more preferably from cells suitable to improve osseointegration and soft tissue integration. Such cells may be selected, without being limited thereto, from e.g. target cells, such as (mammalian, human or nun-human) stem cells selected from, committed stem cells, differentiated cells, adult stem cells, embryonic stem cells, bone marrow stem cells and umbilical cord stem cells, engineered or non-engineered stem cells, primary or immortalized (cell-line) stem cells, preferably mesenchymal stem cells. Other examples of cells used in various aspects include, but are not limited to, cartilage cells, epithelial cells, endothelial cells, endothelial cells of vascular and corneal tissue, skin cells, osteocytes, osteoblasts, cementoblasts, bone cells, myoblasts, neuroblasts, fibroblasts cells of all connective tissues, corneal fibroblasts, skin fibroblasts, gingival fibroblasts, either alone or together with periodontal ligament fibroblasts, keratinozytes, e.g. gingival keratinozytes and keratinocytes from the oral cavity and upper aerodigestive tract, as well as from the skin and the ocular surface, glioblasts, germ cells, hepatocytes, chondrocytes, smooth muscle cells, cardiac muscle cells, connective tissue cells, glial cells, hormone-secreting cells, cells of the immune system, and neurons, but also e.g. cells of the central nervous system, neuronal cells, pericytes, myocytes, adipocytes, astrocytes, melanocytes, etc. In some aspects it is unnecessary to preselect the type of stem cell that is to be used, because many types of stem cells can be induced to differentiate in an organ specific pattern once delivered to a given organ. For example, a stem cell delivered to the liver can be induced to become a liver cell simply by placing the stem cell within the liver. Cells in the matrix can serve the purpose of providing scaffolding or seeding, producing certain compounds, or both. Cells in the above meaning may also comprise viable tissue cells for certain therapeutic uses. It is preferable, but not required, that the tissue cells originate from the same type of tissue for which the hydrogel matrix will be used therapeutically. The viable tissue cells can be derived from autologous tissue sources, allogenic tissue sources, or xenogenic tissue sources. The term "autologous" is meant to refer to tissue that originates from the same host. The term "allogenic" is meant to refer to tissue that originates from a source that is of the same species (i.e., human) but of non-identical genetic composition. The term "xenogenic" is meant to refer to tissue that originates from a species different from the host. Non-limiting examples of types of cells that can be used in combination with an implantable medical device or medical implant as defined herein include stem cells, bone cells, tenocytes, adipocytes, cardiomyocytes, hepatocytes, smooth muscle cells, endothelial cells, and the like. The tissue cells can be added to the hydrogel matrix prior to, during, or after cross-linking occurs. Cells as used herein may also comprise a mixture of cells as defined before.

According to a further specific aspect, such an implantable medical device or medical implant as defined herein comprises a further component, e.g. it may be additionally or alternatively coated with or comprise a specific protective layer, e.g. an antimicrobial polymer, a repellant, a self-cleaning anti-repellant coating, a drug or a drug mixture, and/or may comprise an antibiotic, an antibacterial agent, a polymeric carrier or coating, such as bioabsorbable and preferably biodegradable polymers, therapeutic substances, tissue-specific cell-supporting growth factors including FGF-7, bFGF, PDGF, VEGF, insulin-like growth factors ILGF1 and ILGF2, TGFß1, colony stimulating factors GCSF and GMCSF, and bone morphogenetic proteins BMP-2, BMP-3, BMP-5 and BMP-7. Further coatings comprise constituents of the extracellular matrix (ECM), including ECM molecules such as collagen type I, fibronectin, laminin, bone sialoprotein, osteopontin, osteocalcin and amelogenin, etc.

In this context, a bioabsorbable polymer preferably biodegrades or breaks down in the body and is not present sufficiently long after implantation to cause an adverse local response. Bioabsorbable polymers are gradually absorbed or eliminated by the body by hydrolysis, metabolic process, bulk, or surface erosion. Examples of bioabsorbable, biodegradable materials may include but are not limited to polycaprolactone (PCL), poly-D, L-lactic acid (DL-PLA), poly-L-lactic acid (L-PLA), poly(lactide-coglycolide), poly(hydroxybutyrate), poly(hydroxybutyrateco- valerate), polydioxanone, polyorthoester, polyanhydride, poly(glycolic acid), poly(glycolic acid-cotrimethylene carbonate), polyphosphoester, polyphosphoester urethane, poly (amino acids), cyanoacrylates, poly(trimethylene carbonate), poly(iminocarbonate), copoly(ether-esters), polyalkylene oxalates, polyphosphazenes, polyiminocarbonates, and aliphatic polycarbonates. Biomolecules such as heparin, fibrin, fibrinogen, cellulose, starch, and collagen are typically also suitable. Examples of biostable polymers include Parylene^{®}, Parylast^{®}, polyurethane (for example, segmented polyurethanes such as Biospan^{®}), polyethylene, polyethylene terephthalate, ethylene vinyl acetate, silicone and polyethylene oxide.

Therapeutic substances can include, but are not limited to, antineoplastic, antimitotic, antiinflammatory, antiplatelet, anticoagulant, antifibrin, antithrombin, antiproliferative, antibiotic, antioxidant, and antiallergic substances as well as combinations thereof. Examples of such antineoplastics and/or antimitotics include paclitaxel (e.g., TAXOL^{®} by Bristol-Myers Squibb Co., Stamford, Conn.), docetaxel (e.g., Taxotere^{®} from Aventis S. A., Frankfurt, Germany), methotrexate, azathioprine, vincristine, vinblastine, fiuorouracil, doxorubicin hydrochloride (e.g., Adriamycin^{®} from Pharmacia & Upjohn, Peapack N.J.), and mitomycin (e.g., Mutamycin^{®} from Bristol-Myers Squibb Co., Stamford, Conn.). Examples of such antiplatelets, anticoagulants, antifibrin, and antithrombins include sodium heparin, low molecular weight heparins, heparinoids, hirudin, argatroban, forskolin, vapiprost, prostacyclin and prostacyclin analogues, dextran, D-phe-pro-argchloromethylketone (synthetic antithrombin), dipyridamole, glycoprotein IIb/IIIa platelet membrane receptor antagonist antibody, recombinant hirudin, and thrombin inhibitors such as Angiomax^{™} (Biogen, Inc., Cambridge, Mass.). Examples of such cytostatic or antiproliferative agentsinclude angiopeptin, angiotensin converting enzyme inhibitors such as captopril (e.g., Capoten^{®} and Capozide^{®} from Bristol-Myers Squibb Co., Stamford, Conn.), cilazapril or lisinopril (e.g., Prinivil^{®} and Prinzide^{®} from Merck & Co., Inc., Whitehouse Station, N.J.), calcium channel blockers (such as nifedipine), colchicine, fibroblast growth factor (FGF) antagonists, fish oil (omega 3-fatty acid), histamine antagonists, lovastatin (an inhibitor of HMG-CoAreductase, a cholesterol lowering drug, brand name Mevacor® from Merck & Co., Inc., Whitehouse Station, N.J.), monoclonal antibodies (such as those specific for Platelet-Derived Growth Factor (PDGF) receptors), nitroprusside, phosphodiesterase inhibitors, prostaglandin inhibitors, suramin, serotonin blockers, steroids, thioprotease inhibitors, triazolopyrimidine (a PDGF antagonist), and nitric oxide. An example of an antiallergic agent is permirolast potassium. Other therapeutic substances or agents that may be used include alpha-interferon, genetically engineered epithelial cells, and dexamethasone. In other examples, the therapeutic substance is a radioactive isotope for implantable device usage in radiotherapeutic procedures. Examples of radioactive isotopes include, but are not limited to, phosphoric acid (H₃P³²0₄), palladium (Pd¹⁰³), cesium (CS¹³¹), and iodine (I¹²⁵).

Various embodiments of the invention have been described above. The descriptions are intended to be illustrative, not limitative. Thus, it will be apparent to one skilled in the art that certain modifications maybe made to the invention as described without departing from the scope of the claims set out below.

### Figures:

The following Figures are intended to illustrate the invention further. They are not intended to limit the subject matter of the invention thereto.
- **Figure 1:**: shows the unstructured and polished ceramic samples (dental ZrO₂) without (left) and with assisting electrode (right).
- **Figure 2:**: shows pictures of surfaces (top to bottom, A to C): polished and unstructured surface, cleaned processed surface E310, cleaned processed surface E100.
- **Figure 3:**: shows SEM pictures of cleaned surface for E310 (A) and E100 (B).
- **Figure 4:**: shows an SEM picture of acid edged titanium (A) and spark eroded ceramic (B).a surface topography that, for example, is achieved through acid etching (see Figure 4A), which results in a sharp-edged micro-structure, and a surface topography that, for example, is achieved through spark erosion, which shows a mostly regular round-edged structure (see Figure 4B).

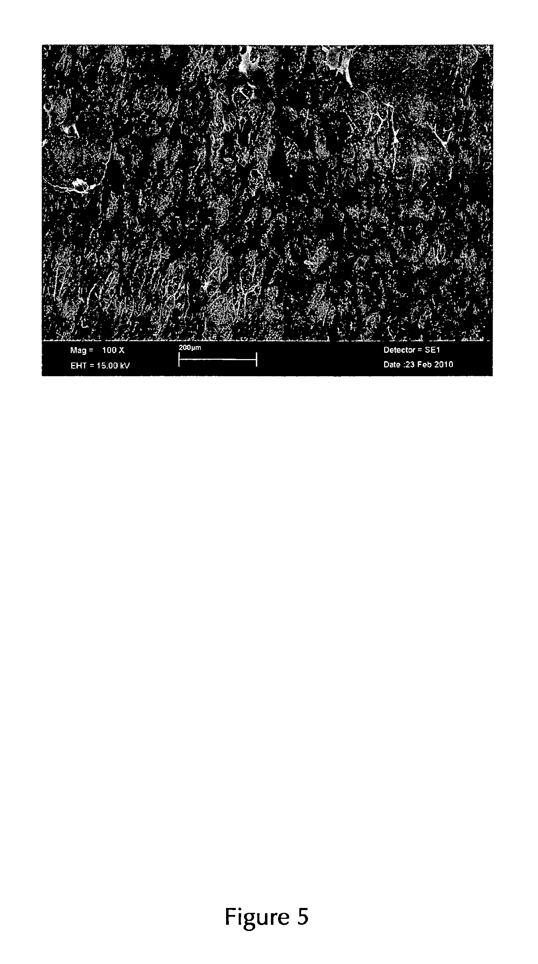

- **Figure 5:**: shows an SEM image of human gingival fibroblasts on an acid etched tita-nium surface. As can be seen, a micro-structured surface with sharp con-tours, like that presented in Figure 4A, has a negative effect on soft tissue cells. If gingival fibroblasts are cultivated on acid edged surfaces, even after 3 days of cultivation, only a low density cell layer result, in addition to which the cells display atypical cell morphology.
- **Figure 6:**: shows an SEM image of human gingival blasts on spark eroded ceramic sur-faces. The cells form after 3 days of cultivation a near confluent cell layer (A), and show typical cell morphology (B). As can be seen, on a spark eroded surface, human gingival fibroblasts formed a near confluent layer of cells af-ter 3 days of cultivation (see Figure 6A). At the same time, the cells displayed their typical morphology (see Figure 6B).

### Examples:

The following examples are intended to illustrate the invention further. They are not intended to limit the subject matter of the invention thereto.

### Intoduction:

When implants are placed in the oral cavity they come in contact principally with 2 different tissue types; the hard tissue and the soft tissue. Therefore, implants should be developed so that they have the capability both a good osseointegration as well as soft tissue integration. Soft tissue integration includes the gingival connective tissue and epithelium as well.

Modification of the surface through spark erosion is targeted to the region of the implant that is important for soft tissue integration. Achievement of satisfactory results in this area following implantation still represents a great challenge for implant manufacturers.

### Example 1

A non-conductive ceramic workpiece was modified using spark erosion method according to the following steps:
**Pre treatment for spark erosion process**
   1. Cleaning of the ceramic sample
**Erosion process**
   2. Positioning and fixation of ceramic sample nearby a conductive element in the erosion setup
   3. Positioning of first working electrode near the ceramic material
   4. Positioning of second working electrode at a position nearby the ceramic material, facing a conductive element
   5. Connecting working electrodes to the generator
   6. Adjustment of flushing
   7. Starting erosion process with second working electrode to generate conductive particles
   8. Starting erosion process with first working electrode for ceramic structuring
**Post processing**
   9. Cleaning of ceramic sample in oven process (removal of carbonic remains)

The process parameters were as follows:
**Parameter set E100**

| Voltage | Current | Pulse ON time |
|---|---|---|
| -200V | P0 = 0,5A | A1 = 0,8µs |

**Parameter set E310**

| Voltage | Current | Pulse ON time |
|---|---|---|
| 200V | P0 = 0,5A | A2 = 1,6µs |

**Parameter field in principle**

| Voltage | < -80V and > 80V |
|---|---|
| Current | < 4A |
| Pulse ON Time | < 10 µs |

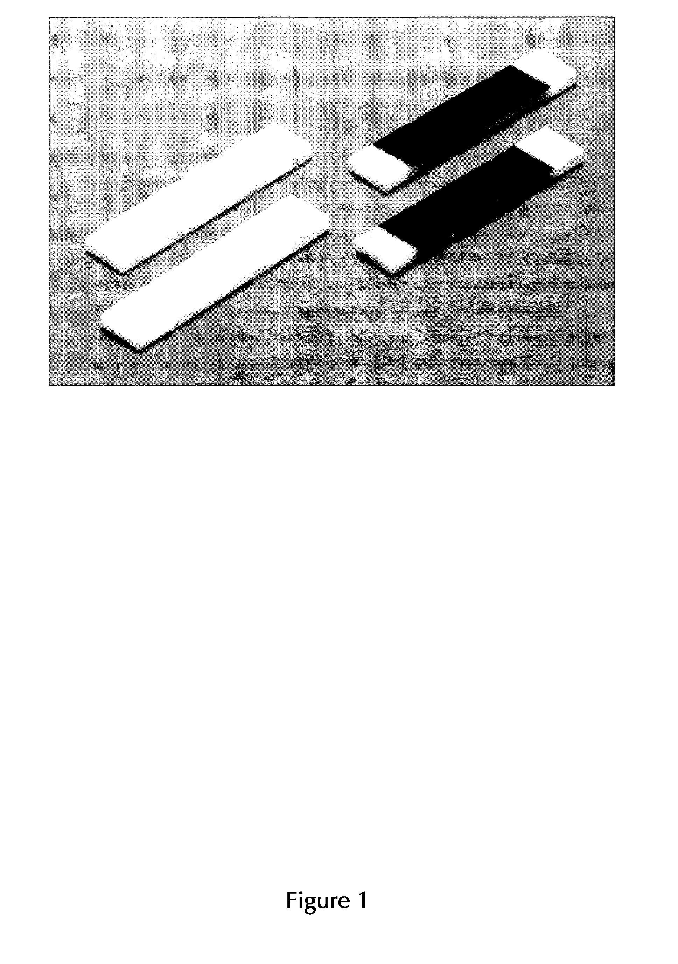

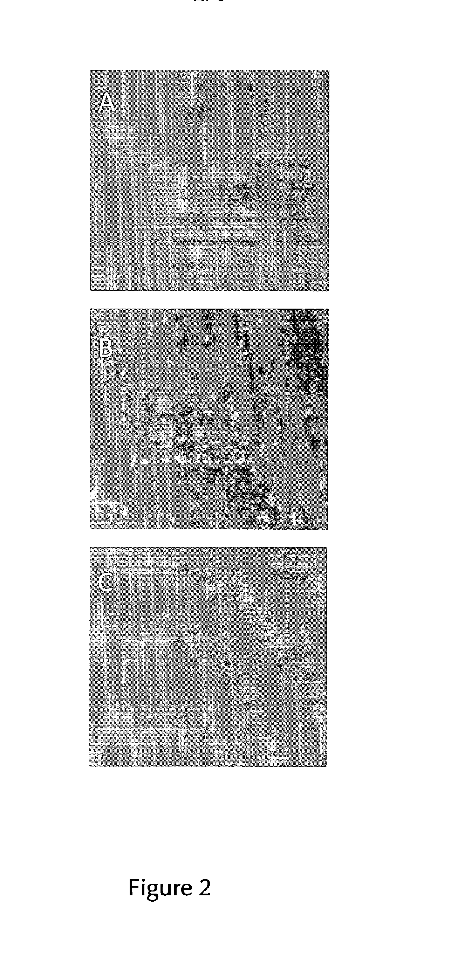

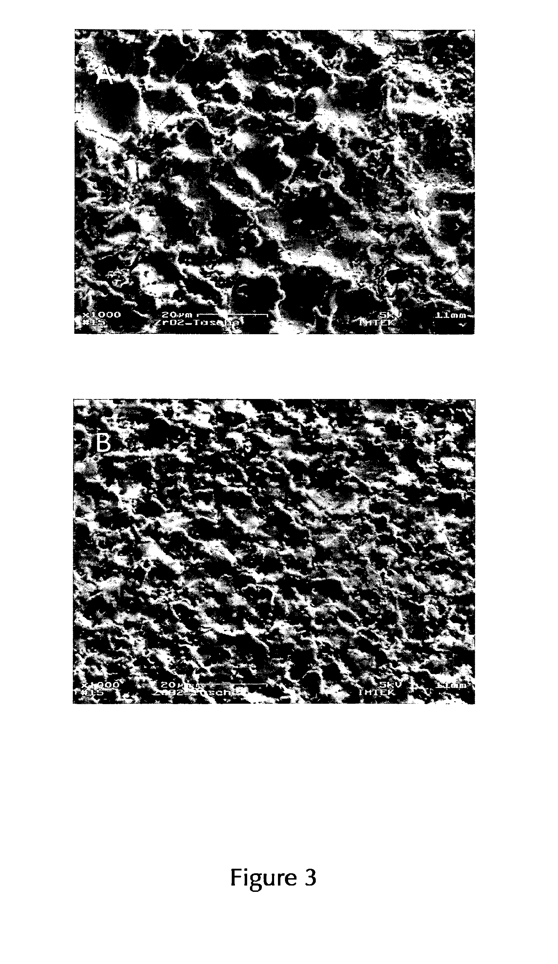

The treated surfaces can be seen in Figures 1 to 3. Figure 1 shows the unstructured and polished ceramic samples (dental ZrO₂) without (left) and with assisting electrode (right). Figure 2 shows pictures of surfaces (top to bottom, A to C): polished and unstructured surface, cleaned processed surface E310, cleaned processed surface E100. Figure 3 shows SEM pictures of cleaned surface for E310 (A) and E100 (B)

### Example 2

The following illustrates that a ceramic (zirconium oxide) surface can be micro-structured through spark erosion, and periodontal connective tissue cells (gingival fibroblasts) can be successfully cultivated *in vitro* on this surface.

In an initial experimental approach periodontal target cells, human gingival fibroblasts, were seeded onto spark eroded ceramic surfaces at sub-confluent cell densities, and cultivated in medium under standard cell culture conditions for 72 hours. Thereafter, the specimens were fixed in 2.5 % formaldehyde, subjected to an ethanol row, critical point dried and coated (sputtered) with a thin gold layer. The structure of the surface, the coverage and morphology of the cells were documented with a Scanning Electron Microscope (SEM).

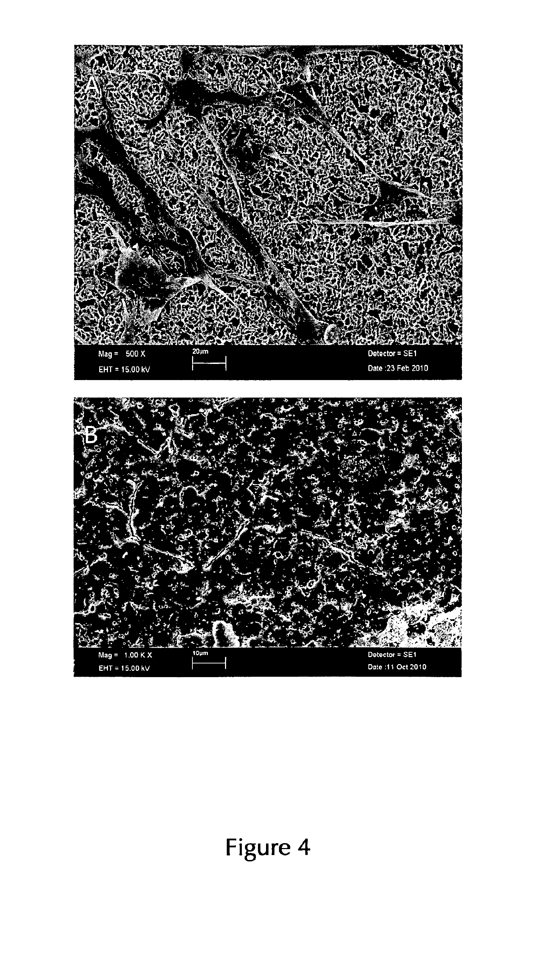

In contrast to a surface topography that, for example, is achieved through acid etching (see Figure 4A), which results in a sharp-edged micro-structure, surface modification through spark erosion shows a mostly regular round-edged structure (see Figure 4B).

Studies have shown that defined micro-structuring of surfaces positively influences cell attachment and proliferation and with that effects the regeneration of soft tissue. Through variation of the process parameters in spark erosion it is possible to fine tune the surface micro-structuring to the desired requirements.

A micro-structured surface with sharp contours, like that presented in Figure 1A, has a negative effect on soft tissue cells. If gingival fibroblasts are cultivated on acid edged surfaces, even after 3 days of cultivation, only a low density cell layer result, in addition to which the cells display atypical cell morphology

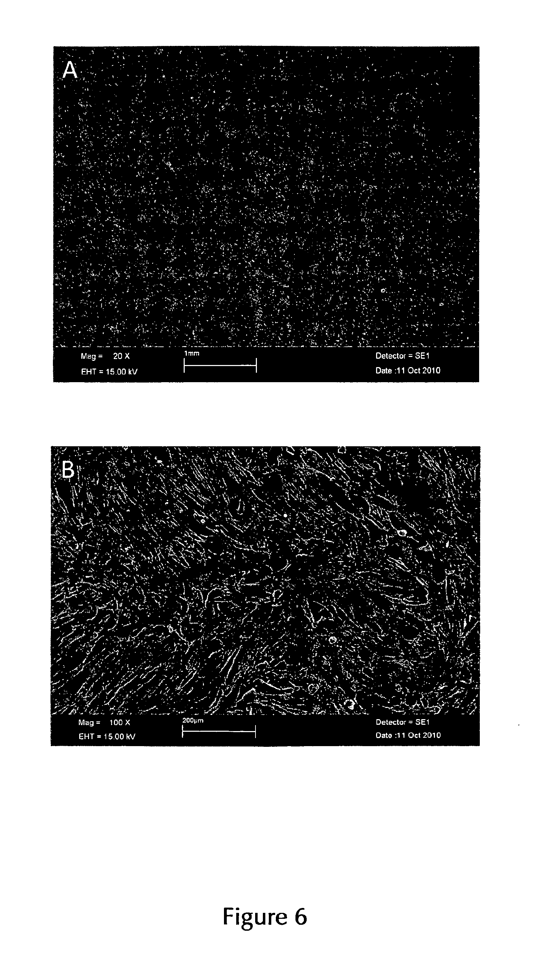

On a spark eroded surface, human gingival fibroblasts formed a near confluent layer of cells after 3 days of cultivation (see Figure 6A). At the same time, the cells displayed their typical morphology (see Figure 6B).

## Claims

1. Method for modifying a workpiece comprising an electrically non-conductive surface *via* spark erosion, the method comprising following steps:
a) providing a workpiece comprising an electrically non-conductive surface;
b) providing a first working electrode facing the workpiece at a region to be modified such that a gap is provided between the workpiece and the first working electrode;
c) providing a dielectric liquid comprising electrically conductive particles, wherein the conductive particles are obtained *via* a burn-off from a second working electrode in a dielectric liquid;
d) flushing the dielectric liquid comprising the electrically conductive particles to the workpiece, preferably continuously, such that the electrically conductive particles of the dielectric liquid are deposited at the region to be modified and form an assisting electrode on the electrically non-conductive surface, wherein the dielectric liquid preferably fills the gap between the workpiece and the first working electrode;
e) applying an electric current to the first working electrode such that a plasma channel is generated between the first working electrode and the assisting electrode at the region to be modified, thereby modifying the workpiece *via* spark erosion.

2. The method according to claim 1, wherein said second working electrode being placed in a position at, nearby or distinct from the workpiece, thereby facing a conductive element, wherein a gap is provided between the second working electrode and the conductive element, the gap being filled with the dielectric liquid.

3. The method according to any of claims 1 or 2, wherein the burn-off comprises electrically conductive particles derived from the second working electrode and/or the dielectric liquid selected from graphite and/or metal particles.

4. The method according to any of claims 1 to 3, wherein the workpiece is coated at the region to be modified prior to depositing the conductive particles with an electrically conductive coating in form of a viscous fluid, film, lacquer, or vapour deposited layer, wherein the electrically conductive coating forms a first assisting electrode on the electrically non-conductive surface.

5. The method according to claim 4, wherein the electrically conductive coating has a thickness of about 0.01 µm to about 1 mm.

6. The method according to any of claims 1 to 5, wherein the layer of deposited electrically conductive particles and/or the electrically conductive coating has an electrical conductivity of at least 0.01 Scm⁻¹.

7. The method according to any of claims 1 to 6, wherein the voltage of the electric current applied in step 1e) is about - 300 V to about + 300 V, preferably about - 200 V to about + 200 V.

8. The method according to any of claims 1 to 7, wherein the current of the electric current applied in step 1e) is about 0.1 to about 5 A, preferably about 0.1 to about 4 A, more preferably about 0.1 to about 3 A, even more preferably about 0.1 to about 2 A, likewise even more preferably about 0.1 to about 1 A, most preferably about 0.3 to about 0.6 A.

9. The method according to any of claims 1 to 8, wherein the pulsation ON time of the electric current applied in step 1e) has a duration of about 0.1 to about 15 µs, preferably a duration of about 0.1 to about 10 µs, more preferably of about 0.1 to about 5 µs.

10. The method according to any of claims 1 to 9, wherein the workpiece is made from an electrically non-conductive solid state body, an electrically non-conductive, amorphous solid body, an electrically non-conductive crystal, an electrically non-conductive ceramic, glass, quartz, sapphire, or an electrically non-conductive mixture of the afore mentioned materials, or comprises an outer surface or surface layer made from such an electrically non-conductive material.

11. The method according to claim 10, wherein the electrically non-conductive ceramic comprises apatite, hydroxyl apatite, zirconium oxide, ZrO₂, fully or partially stabilized zirconium oxide, zircon, ZrSiO₄, fully or partially stabilized ZrO₂, zirconium silicate, yttrium oxide, Y₂O₃, yttrium zirconium oxide (Y₂O₃-ZrO₂), alumina toughened zirconia silicon, silicon, silicon nitride, Si₃N₄, silicon carbide, silicate, boron, boron carbide, boron nitride, tungsten carbide, aluminium, aluminium oxide, Al₂O₃, zirconia toughened alumina, ZnO, In₂O₃ and/or comprises a compound having the following formula MCrAlX, wherein M is selected from the group comprising iron (Fe), Cobalt (Co), Nickel (Ni), and X is an active element selected from the group comprising Yttrium (Y), Silicon (Si) and/or an element selected from rare earth metals.

12. The method according to any of claims 1 to 11, wherein the workpiece is an implantable medical device, a medical implant, an orthopaedic implant, an oral implant, an endoprosthesis, a stent, a graft, a pacemaker or a casing thereof, an artificial joint or a part thereof, artificial bones, or parts thereof, fixing materials for medical purposes, surgical nails, screws clamps, other technical workpieces, a jet engine, a turbine or a part thereof, a gas turbine or a part thereof, a gas turbine of an aircraft, a gas turbine for an electricity generating power station, a steam turbine or a compressor, a turbine blade, a turbine bucket, a turbine casing, a vane, a guide vane, a heat shield or an electric isolator, a heat shield or an electric isolator of the afore mentioned turbines, any ceramic workpiece or any workpiece consisting of ceramic or being coated with a ceramic layer.

13. The method according to any of claims 1 to 12, wherein the dielectric liquid comprises water, a water containing solution or suspension, a water containing solution or suspension with at least one electrically conductive compound, a carbon containing liquid, a liquid or suspension containing an organic compound, a hydrocarbon compound, a hydrocarbon compound selected from a compound having formula CₙH₂ₙ₊₂ or CₙH₂ₙ, wherein n is an integer selected from a range of about 5 to 40, an aromatic hydrocarbon, or a mixture thereof, kerosene, petroleum, tetrachlorocarbon, trichloroethylene, tetraline, olive oil, paraffin oil, or specific dielectrics such as IME 63^{®}, OH 2753^{®}, glycols, paraffinic oil, paraffinic mineral oil, naphtenic oil, naphtenic mineral oil, silicon oils, polyols, glycerine, polysaccharides or a sugar.

14. The method according to claim 13, wherein the workpiece or the surface thereof is cleaned after modification of the surface.

15. The method according to claim 14, wherein cleaning comprises a heat treatment and/or a chemical treatment.

16. Modified workpiece obtained or obtainable according to a method according to any of claims 1 to 15.

17. Modified workpiece according to claim 16, wherein the workpiece is an implantable medical device or medical implant cultivated *in vitro* with target cells.

18. Modified workpiece according to claim 17, wherein said target cells are selected from (mammalian, human or nun-human) stem cells selected from, committed stem cells, differentiated cells, adult stem cells, bone marrow stem cells and umbilical cord stem cells, engineered or non-engineered stem cells, primary or immortalized (cell-line) stem cells, mesenchymal stem cells, cartilage cells, epithelial cells, endothelial cells, endothelial cells of vascular and corneal tissue, skin cells, osteocytes, osteoblasts, cementoblasts, bone cells, myoblasts, neuroblasts, fibroblasts cells of all connective tissues, gingival and/or skin and corneal fibroblasts, either alone or together with periodontal ligament fibroblasts, keratinozytes, gingival keratinozytes, glioblasts, germ cells, hepatocytes, chondrocytes, smooth muscle cells, cardiac muscle cells, connective tissue cells, glial cells, hormone-secreting cells, cells of the immune system, neurons, cells of the central nervous system, neuronal cells, pericytes, myocytes, adipocytes, astrocytes, melanocytes, tissue cells, tissue cells from autologous tissue sources, allogenic tissue sources, or xenogenic tissue sources, autologous cells, allogenic cells, xenogenic cells, tissue cells, bone cells, tenocytes, adipocytes, cardiomyocytes, hepatocytes, smooth muscle cells, endothelial cells or a mixture of cells as defined before.

19. Modified workpiece according to any of claims 16 to 18, wherein the implantable medical device or medical implant comprises a further component selected from an antimicrobial polymer, tissue-specific cell-supporting growth factors, FGF-7, bFGF, PDGF, VEGF, insulin-like growth factors ILGF1 and ILGF2, TGFß1, colony stimulating factors, GCSF, GMCSF, bone morphogenetic proteins, BMP-2, BMP-3, BMP-5, BMP-7, constituents of the extracellular matrix (ECM), ECM molecules, collagen type I, fibronectin, laminin, bone sialoprotein, osteopontin, osteocalcin and amelogenin.
